# EUROPÄISCHE PATENTSCHRIFT

(11) **EP 3 048 597 B1**
(45) Veröffentlichungstag und Bekanntmachung des Hinweises auf die Patenterteilung: **15.08.2018**
(21) Anmeldenummer: 15000165.9
(22) Anmeldetag: 21.01.2015
(51) Int. Cl.: G09B 9/12, B25J 19/00

(54) **Simulationsanordnung**
Simulation assembly
Agencement de simulation

(43) Veröffentlichungstag der Anmeldung: 27.07.2016
(73) Patentinhaber: BEC GmbH, 72793 Pfullingen (DE)
(72) Erfinder: Buck, Matthias, 72764 Reutlingen (DE); Farah, Oussama Ben, 70329 Stuttgart (DE); Gerlich, Martin, 70182 Stuttgart (DE)
(74) Vertreter: Reinhardt, Annette

(56) Entgegenhaltungen:
- WO-A1-2010/105638
- WO-A1-2011/144228
- US-A1- 2003 085 681
- Max Planck Institute: "Cybermotion Simulator", , 20. Januar 2015 (2015-01-20), XP055198492, Gefunden im Internet: URL:http://www.kyb.tuebingen.mpg.de/resear ch/equipment/vrf/vr/motionlab-old/motion-s imulators-old.html [gefunden am 2015-06-25]
- Kuka Roboter Gmbh: "Robots KR 360-3; KR 500-3 Spezifikation Version: Spez KR 360-3 KR 500-3 V5 de (PDF)", , 16. Juli 2013 (2013-07-16), Seiten 1,9-18, XP002741409, Gefunden im Internet: URL:http://www.kuka-robotics.com/res/sps/e 6c77545-9030-49b1-93f5-4d17c92173aa_Spez_K R_360-3_KR_500-3_de.pdf [gefunden am 2015-06-25]

## Beschreibung

Die Erfindung betrifft eine Simulationsanordnung der im Oberbegriff des Anspruchs 1 angegebenen Gattung.

Aus der EP 2 363 849 A2 ist eine Simulationsanordnung mit einem Roboterarm und mit einer beweglichen Plattform bekannt. Der Roboterarm ist an einer Linearachse verfahrbar. Der Roboterarm wird ebenso wie die bewegliche Plattform, ein Steuerorgan sowie die Linearachse von einer gemeinsamen Rechen- und Kontrolleinheit gesteuert.

Bei derartigen Simulationsanordnungen wird die Rechen- und Kontrolleinheit, die die Simulationssteuereinrichtung und die Robotersteuereinrichtung umfasst, üblicherweise ortsfest angeordnet und ist über Energieleitungen und Datenleitungen mit den einzelnen anzusteuernden Antrieben und Ein-/Ausgabeeinrichtungen verbunden. Eine derartige Simulationsanordnung wurde vom Max-Planck-Institut Tübingen unter dem Namen MPI-Cybermotion-Simulator entwickelt. Um eine ausreichende Bewegungsfreiheit für die Bewegung der Aufnahme für den Nutzer zu haben, ist bei dieser Simulationsanordnung die erste Achse, um die der Sockel gegenüber dem Gestell drehbar gelagert ist, als endlos drehende Achse ausgebildet. Zur Übertragung der Energie von der Robotersteuereinrichtung zu den einzelnen Antrieben des Roboterarms sind eine Vielzahl von Schleifringen zwischen dem Gestell und dem Sockel vorgesehen.

Aus der WO 2011/144228 A1 ist eine Simulationsanordnung mit einem Roboterarm bekannt. Der Sockel ist gegenüber dem Grundgestell endlos drehbar. Die Energieübertragung zu den einzelnen Antrieben des Roboterarms über die endlos drehende Achse erfolgt über Schleifringe. Eine entsprechende Simulationsanordnung geht auch aus einer Internetveröffentlichung des Max-Planck-Instituts (http:/www.kyb.tuebingen.mpg.de/research/equipment/vrf/vr/motionlab-old/motion-simulators-old.html)hervor.

Die US 2003/0085681 A1 offenbart einen mehrachsigen Roboterarm, bei dem die Energieversorgung der einzelnen Antriebe über Anschlussleitungen erfolgt. An den Achsen erfolgt die Energieübertragung über Schleifringe oder Drehtransformatoren. Dadurch ist eine endlose Drehung um die einzelnen Achsen möglich, ohne dass Kabel abgerissen werden.

Der Erfindung liegt die Aufgabe zugrunde, eine Simulationsanordnung der gattungsgemäßen Art zu schaffen, die einen vereinfachten Aufbau besitzt.

Diese Aufgabe wird durch eine Simulationsanordnung mit den Merkmalen des Anspruchs 1 gelöst.

Es ist vorgesehen, dass die Robotersteuereinrichtung an dem Sockel festgelegt ist. Die Robotersteuereinrichtung dreht dadurch im Betrieb gegenüber dem Gestell mit. Zwischen dem Gestell und dem Sockel müssen somit nicht mehr eine Vielzahl von Energieübertragungsverbindungen wie beispielsweise Schleifringe zur Ansteuerung der einzelnen Antriebe vorgesehen sein. Vielmehr wird die Energie für die Robotersteuereinrichtung und alle Antriebe über eine gemeinsame Energieübertragungsverbindung vom Gestell zum Sockel übertragen, und erst an der Robotersteuereinrichtung erfolgt die Ansteuerung der einzelnen Antriebe, die hierzu über getrennte Energieübertragungsverbindungen mit der Robotersteuereinrichtung verbunden sind. Der Sockel kann dabei ein zusätzlicher Sockel oder ein Karussell des Roboterarms sein, in den die Robotersteuereinrichtung integriert ist. Über die endlos drehende Achse zwischen Gestell und Sockel wird ein großer Bewegungsraum der Aufnahme für den Nutzer erreicht. Die endlos drehende Achse ist dabei eine Achse, die eine endlose Drehbewegung zwischen Gestell und Sockel zulässt. Die Relativdrehung wird mechanisch weder über die Achse selbst noch von Energie- oder Datenleitungen oder dgl. begrenzt. Der Roboterarm kann ein üblicher Industrieroboterarm sein.

Vorteilhaft ist mindestens ein Schleifring zur Übertragung von Energie von dem Gestell zu dem Sockel vorgesehen, über den sowohl die Energie für die Robotersteuereinrichtung und den mindestens einen elektrischen Antrieb als auch die Energie für die mindestens eine Ein-/Ausgabeeinrichtung der Aufnahme übertragen wird. Dabei kann die Ein-/Ausgabeeinrichtung über eine separate Energieübertragungsverbindung mit der Robotersteuereinrichtung verbunden sein. Bevorzugt ist jedoch eine zentrale Energieversorgung vorgesehen, mit der die einzelnen Verbraucher wie die elektrischen Antriebe und die Ein-/Ausgabeeinrichtung insbesondere separat abgesichert verbunden sind. Es kann vorgesehen sein, dass ein einziger Schleifring für die Übertragung von Energie von dem Gestell zu dem Sockel vorgesehen ist. Die zweite Phase kann durch den Roboterarm selbst gebildet sein. Vorteilhaft sind jedoch zwei, insbesondere drei Schleifringe für die Übertragung von Energie von dem Gestell zu dem Sockel vorgesehen, über die die einzelnen Phasen der Energieleitung geführt sind. Vorteilhaft sind mehrere elektrische Antriebe und mehrere Ein-/Ausgabeeinrichtungen vorgesehen, und die Energie von allen von der Robotersteuereinrichtung angesteuerten elektrischen Antrieben und die Energie für alle Ein-/Ausgabeeinrichtungen wird über den mindestens einen gemeinsamen Schleifring zur Übertragung von Energie übertragen.

Eine Ein-/Ausgabeeinrichtung kann dabei eine Eingabeeinrichtung wie beispielsweise ein Joystick, ein Lenkrad, eine Tastatur oder dgl., eine Ausgabeeinrichtung wie beispielsweise ein Bildschirm, ein Projektor oder dgl. oder eine Ein- und Ausgabeeinrichtung wie beispielsweise ein Touchpad sein.

Vorteilhaft ist ein Schleifring zur Übertragung von Daten von dem Gestell zu dem Sockel vorgesehen. Dabei kann die Übertragung der Daten von dem Gestell zu dem Sockel grundsätzlich über den mindestens einen Schleifring erfolgen, über den auch die Energie von dem Gestell zu dem Sockel übertragen wird, wenn die Signale entsprechend überlagert werden. Bevorzugt ist für die Übertragung von Daten von dem Gestell zu dem Sockel jedoch mindestens ein von dem Schleifring zur Übertragung von Energie separater Schleifring vorgesehen. Insbesondere sind zur Übertragung von Daten von dem Gestell zu dem Sockel zwei Schleifringe vorgesehen, über die die Daten übertragen werden. Über den Schleifring zur Übertragung von Daten werden dabei vorteilhaft sowohl Daten für die Robotersteuereinrichtung als auch Daten für mindestens eine Ein-/Ausgabeeinrichtung übertragen. Hierzu werden die Daten geeignet miteinander gekoppelt, beispielsweise über ein Bussystem oder dgl. Die beiden Schleifringe bilden dann vorteilhaft Hin- und Rückleitung der Busleitung.

Es kann auch vorgesehen sein, die Daten zwischen der Simulationssteuereinrichtung und der Ein-/Ausgabeeinrichtung mindestens teilweise über eine kabellose Datenverbindung zu übertragen. Dadurch kann eine Datenleitung, die die Simulationssteuereinrichtung über den Roboterarm mit der Ein-/Ausgabeeinrichtung verbindet, entfallen. Vorteilhaft besitzt die Aufnahme eine Ein-/Ausgabesteuereinrichtung zur Steuerung der mindestens einen Ein-/Ausgabeeinrichtung. Über die Ein-/Ausgabesteuereinrichtung ist die Ein-/Ausgabeeinrichtung vorteilhaft mit der Simulationssteuereinrichtung verbunden. Die kabellose Datenverbindung ist dabei vorteilhaft eine Verbindung der Simulationssteuereinrichtung mit der Ein-/Ausgabesteuereinrichtung. Die Verbindung der Ein-/Ausgabesteuereinrichtung mit einer oder mehreren Ein-/Ausgabeeinrichtungen kann an der Aufnahme auf einfache Weise über Kabel erfolgen.

Um einen großen Bewegungsbereich der Aufnahme für den Nutzer zu erreichen, ist vorgesehen, dass die Simulationsanordnung eine Linearachse besitzt, an der das Gestell gehalten und gemeinsam mit dem Roboterarm in Richtung einer Translationsbewegungsachse verfahrbar ist. Die Simulationssteuereinrichtung bewegt sich im Betrieb dabei vorteilhaft nicht mit dem Gestell. Die Simulationssteuereinrichtung ist vorteilhaft ortsfest im Raum angeordnet. Es kann jedoch auch vorgesehen sein, die Simulationssteuereinrichtung ebenfalls an dem Sockel anzuordnen, so dass die Simulationssteuereinrichtung im Betrieb mit dem Gestell eine Translationsbewegung ausführen kann. Auch mehrere Linearachsen, die Bewegungen in Richtung mehrerer Translationsbewegungsachsen ermöglichen, können vorteilhaft sein. Durch die Anordnung der Robotersteuereinrichtung in dem Sockel bei einem Roboterarm, der an einer Linearachse verfahrbar gehalten ist, entfällt die Mitnahme einer Vielzahl von Leitungen über Schleppketten. Dadurch sind der Verschleiß und die Anfälligkeit der Simulationsanordnung für Kabelbruch deutlich verringert.

Der Roboterarm ist vorteilhaft ein Knickarmroboter. Der Roboterarm besitzt vorteilhaft mindestens fünf Rotationsbewegungsachsen. Eine sechste Rotationsbewegungsachse wird durch die Rotationsbewegungsachse zwischen Gestell und Sockel gebildet. Eine Translationsbewegungsachse kann durch die Linearachse gebildet sein. Auch weitere Rotationsbewegungsachsen oder Translationsbewegungsachsen können vorteilhaft sein.

Vorteilhaft ist der Roboterarm ähnlich einem üblichen Industrieroboter ausgebildet. Der Roboterarm besitzt vorteilhaft eine Schwinge, die gegenüber dem Sockel um eine zweite Rotationsbewegungsachse schwenkbar ist. Die Schwinge ist dabei vorteilhaft mit einem ersten Ende an dem Sockel schwenkbar gelagert. Der Roboterarm besitzt vorteilhaft einen Armabschnitt, der gegenüber der Schwinge um eine dritte Rotationsbewegungsachse schwenkbar ist. Der Armabschnitt ist dabei vorteilhaft an einem zweiten Ende der Schwinge schwenkbar gelagert. Der Roboterarm besitzt vorteilhaft einen Handabschnitt, der Schwenkbewegungen um eine vierte Rotationsbewegungsachse, eine fünfte Rotationsbewegungsachse und eine sechste Rotationsbewegungsachse ermöglicht. Der Armabschnitt ist dabei vorteilhaft an einem ersten Ende an der Schwinge schwenkbar gelagert, und an einem zweiten Ende des Armabschnitts ist der Handabschnitt vorgesehen. Durch die Anordnung der Robotersteuereinrichtung an dem Sockel und nicht an dem Gestell kann an dem Sockel ein Industrieroboter mit üblichem Aufbau angeordnet werden, der die Aufnahme für den Nutzer trägt.

Vorteilhaft sind die vierte Rotationsbewegungsachse und die sechste Rotationsbewegungsachse in einer Schwenklage um die fünfte Rotationsbewegungsachse parallel zueinander ausgerichtet.

Die vierte Rotationsbewegungsachse ist vorteilhaft eine endlos drehende Achse. Die vierte Rotationsbewegungsachse und die fünfte Rotationsbewegungsachse sind vorteilhaft von elektrischen Antrieben angetrieben, die an der dem Handabschnitt abgewandten Seite des Armabschnitts angeordnet sind. Die Übertragung der Rotationsbewegung zur vierten und fünften Rotationsbewegungsachse erfolgt dabei vorteilhaft mechanisch, beispielsweise über Verbindungswellen. Zum Antrieb der sechsten Rotationsbewegungsachse ist vorteilhaft ein im Inneren des Armabschnitts angeordneter elektrischer Antrieb vorgesehen, der die sechste Rotationsbewegungsachse direkt elektrisch antreibt. Vorteilhaft ist mindestens ein Schleifring für die Übertragung von Energie für die mindestens eine Ein-/Ausgabeeinrichtung an der vierten Rotationsbewegungsachse vorgesehen. Dabei sind vorteilhaft jeweils mindestens zwei, insbesondere drei Schleifringe für die einzelnen Phasen einer Energieleitung vorgesehen. Der mindestens eine Schleifring dient vorteilhaft zur Übertragung der Energie für alle elektrischen Verbraucher an der Aufnahme für den Nutzer. Es kann auch vorgesehen sein, dass die Aufnahme um eine weitere Rotationsbewegungsachse drehbar ist und eine Energieleitung für die weitere Rotationsbewegungsachse über den mindestens einen Schleifring oder mindestens einen weiteren, separaten Schleifring geführt ist.

Die sechste Rotationsbewegungsachse ist vorteilhaft eine endlos drehende Achse. An der sechsten Rotationsbewegungsachse ist vorteilhaft mindestens ein Schleifring zur Übertragung von Energie für die mindestens eine Ein-/Ausgabeeinrichtung vorgesehen. Sind sowohl die vierte und als auch die sechste Rotationsbewegungsachse als endlos drehende Achsen ausgebildet, so kann durch parallele Ausrichtung der vierten und der sechsten Rotationsbewegungsachse und gleichzeitigem rotierenden Antrieb um beide Achsen in der gleichen Drehrichtung eine sehr hohe Drehgeschwindigkeit der Aufnahme für den Nutzer erreicht werden. Um eine hohe Drehgeschwindigkeit der Aufnahme für den Nutzer zu erreichen, kann alternativ oder zusätzlich vorgesehen sein, dass an der sechsten Rotationsbewegungsachse ein Getriebe, insbesondere ein Planetengetriebe, angeordnet ist.

Die Gestaltung der vierten und der sechsten Rotationsbewegungsachse als endlos drehende Achsen stellt einen eigenständigen erfinderischen Gedanken dar, der unabhängig von der Anordnung der Robotersteuereinrichtung an dem Sockel ist. Die vierte Rotationsbewegungsachse und die sechste Rotationsbewegungsachse sind dabei derart ausgebildet, dass eine endlose Drehbewegung, also eine Drehbewegung um unendlich viele Umdrehungen, möglich ist. Der maximal mögliche Drehwinkel wird weder durch die Konstruktion der Rotationsbewegungsachse noch durch Energie- oder Datenleitungen oder dgl. begrenzt. Dadurch ergeben sich zusätzliche Freiheitsgrade für die Bewegung der Aufnahme für den Nutzer bei einer Simulation. Es sind Drehbewegungen über eine beliebige Anzahl von Umdrehungen um die vierte und/oder die sechste Rotationsbewegungsachse möglich. Durch die Ausbildung der vierten und der sechsten Rotationsbewegungsachse als endlos drehende Achsen kann die Aufnahme insbesondere bei paralleler Ausrichtung der vierten und der sechsten Rotationsbewegungsachse sehr schnelle Rotationsbewegungen ausführen. Dadurch ist eine sehr realitätsnahe Simulation möglich.

Ein Ausführungsbeispiel der Erfindung wird im Folgenden anhand der Zeichnung erläutert. Es zeigen:
- Fig. 1 bis 3: schematische Seitenansichten von Simulationsanordnungen,
- Fig. 4: eine schematische Darstellung der Steuereinrichtungen einer Simulationsanordnung.

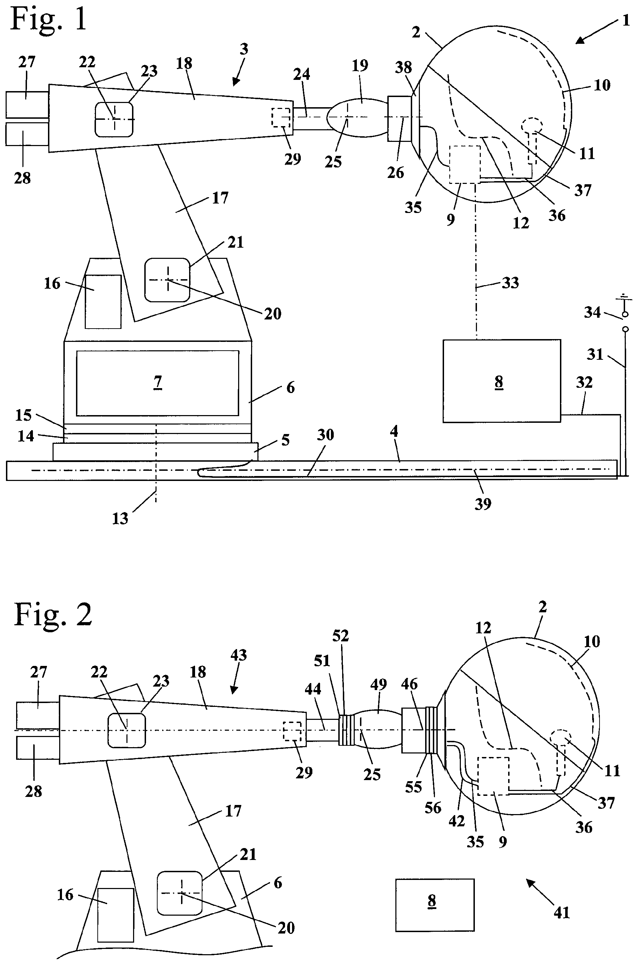

Fig. 1 zeigt schematisch eine Simulationsanordnung 1. Die Simulationsanordnung 1 kann beispielsweise zur Simulation des Fahr- oder Flugverhaltens von Fahrzeugen oder Flugzeugen genutzt werden. Hierzu besitzt die Simulationsanordnung 1 eine Aufnahme 2 für einen Nutzer. Die Aufnahme 2 ist im Ausführungsbeispiel als geschlossene Kapsel ausgebildet, in der ein Sitz 12 für den Nutzer vorgesehen ist. In der Aufnahme 2 sind Ein-/Ausgabeeinrichtungen vorgesehen. Ein-/Ausgabeeinrichtungen sind dabei Eingabeeinrichtungen, Ausgabeeinrichtungen oder Einrichtungen, über die sowohl Eingaben als auch Ausgaben möglich sind wie beispielsweise Touchpads. Im Ausführungsbeispiel sind als Ausgabeeinrichtung ein Bildschirm 10 und als Eingabeeinrichtung ein Joystick 11 vorgesehen. Anstatt des Joysticks 11 kann beispielsweise auch ein Lenkrad oder dgl. vorgesehen sein. Anstatt des Bildschirms 10 können auch ein oder mehrere Projektoren vorgesehen sein, die ein Bild auf eine Projektionsfläche projizieren. Es kann eine Vielzahl anderer und/oder weiterer Ein-/Ausgabeeinrichtungen vorgesehen sein. Die Anzahl und Art der Ein-/Ausgabeeinrichtungen ist vorteilhaft dem zu simulierenden Fahr- oder Flugzeug nachgebildet. Zur Ansteuerung der Ein-/Ausgabeeinrichtungen ist im Ausführungsbeispiel in der Aufnahme 2 eine Ein-/Ausgabesteuereinrichtung 9 vorgesehen, die über eine Energie- und Datenleitung 36 mit dem Joystick 11 und über eine Energie- und Datenleitung 37 mit dem Bildschirm 10 verbunden ist. Die Energieleitung und die Datenleitung können auch jeweils als separate Leitungen ausgebildet sein. Über die Ein-/Ausgabesteuereinrichtung wird die Anzeige am Bildschirm 10 entsprechend der vom Nutzer über den Joystick 11 eingegebenen Bewegung und entsprechend der durchzuführenden Simulation angesteuert.

Die Aufnahme 2 ist an einem Roboterarm 3 gehalten. Über den Roboterarm 3 kann die Aufnahme 2 im Raum bewegt und gedreht werden. Im Ausführungsbeispiel ist der Roboterarm 3 an einer Linearachse 4 in Richtung einer Translationsbewegungsachse 39 im Raum verfahrbar. An der Linearachse 4 ist ein Gestell 5 gehalten. An dem Gestell 5 ist ein Sockel 6 des Roboterarms 3 um eine erste Rotationsbewegungsachse 13 endlos drehbar gelagert. Zur Ausführung der Drehbewegung des Sockels 6 gegenüber dem Gestell 5 um die erste Rotationsbewegungsachse 13 ist am Sockel 6 ein erster elektrischer Antrieb 16 angeordnet.

Der Sockel 6 ist im Ausführungsbeispiel das Karussell des Roboterarms 3. Der Sockel 6 kann jedoch auch ein separates Element sein, an dem ein Karussell eines Roboterarms festgelegt ist. Am Sockel 6 ist eine Schwinge 17 im Bereich eines ihrer Endbereiche um eine zweite Rotationsbewegungsachse 20 schwenkbar gelagert. Zur Ausführung der Schwenkbewegung der Schwinge 17 um die zweite Rotationsbewegungsachse 20 ist ein zweiter elektrischer Antrieb 21 vorgesehen, der im Ausführungsbeispiel an der Schwinge 17 gehalten ist. An dem dem Sockel 6 abgewandten Ende der Schwinge 17 ist ein Armabschnitt 18 um eine dritte Rotationsbewegungsachse 22 schwenkbar gelagert. Zur Ausführung der Rotationsbewegung um die dritte Rotationsbewegungsachse 22 ist am Armabschnitt 18 ein dritter elektrischer Antrieb 23 angeordnet. Der Armabschnitt 18 besitzt ein freies Ende, an dem ein Handabschnitt 19 angeordnet ist. Der Handabschnitt 19 ermöglicht Rotationsbewegungen um eine vierte Rotationsbewegungsachse 24, die in Längsrichtung des Armabschnitts 18 ausgerichtet ist, um eine fünfte Rotationsbewegungsachse 25, die senkrecht zur vierten Rotationsbewegungsachse24 steht, sowie um eine sechste Rotationsbewegungsachse 26, die senkrecht zur fünften Rotationsbewegungsachse 25 ausgerichtet ist. In der in Fig. 1 gezeigten Schwenkstellung des Handabschnitts 19 um die fünfte Rotationsbewegungsachse 25 sind die vierte Rotationsbewegungsachse 24 und die sechste Rotationsbewegungsachse 26 parallel zueinander ausgerichtet. Im Ausführungsbeispiel liegen die Rotationsbewegungsachsen 24 und 26 in dieser Schwenkstellung achsgleich zueinander.

Die Aufnahme 2 besitzt einen Verbindungsflansch 38, mit dem sie am Handabschnitt 19 gehalten ist. Im Ausführungsbeispiel ist der Verbindungsflansch 38 bei auf dem Sitz 12 sitzendem Nutzer hinter dem Rücken eines Nutzers angeordnet. Bei aufrecht auf dem Sitz 12 sitzendem Nutzer verläuft die sechste Rotationsbewegungsachse 26 im Ausführungsbeispiel etwa horizontal.

Zur Steuerung der Simulationsanordnung 1 ist eine Simulationssteuereinrichtung 8 vorgesehen. Die Simulationssteuereinrichtung 8 ist im Ausführungsbeispiel ortsfest im Raum angeordnet. Bei einer Bewegung des Gestells 5 an der Linearachse 4 oder bei Bewegungen des Roboterarms 3 um die Rotationsbewegungsachsen 13, 20, 22, 24, 25, 26 wird die Simulationssteuereinrichtung 8 nicht bewegt. Alternativ kann vorgesehen sein, dass die Simulationssteuereinrichtung 8 im Sockel 6 angeordnet ist und im Betrieb mit dem Gestell 5 und dem Sockel 6 in der Translationsbewegungsrichtung 39 bewegt wird. Dabei kann die Simulationssteuereinrichtung 8 über kabellose Verbindungen und/oder über Verbindungsleitungen mit Peripheriegeräten wie der Ein-/Ausgabesteuereinrichtung 9 verbunden sein.

Bei einer tatsächlichen Bewegung eines Fahrzeugs oder Flugzeugs werden große Wege zurückgelegt. Der Bewegungsbereich der Aufnahme 2 der Simulationsanordnung 1 ist deutlich geringer. Um dem Nutzer dennoch den Eindruck einer tatsächlich zurückgelegten Wegstrecke zu vermitteln, rechnet die Stimulationssteuereinrichtung 8 die zu simulierende Bewegung in eine Bewegung mit verringerter Wegstrecke um, die beim Bedienereinen möglichst realitätsnahen Sinneseindruck erzeugt. Dabei werden in bekannter Weise die Beschleunigungen, die ein Bediener bei der Bewegung des Fahrzeugs oder Flugzeugs spürt, durch entsprechende Bewegungen der Aufnahme 2 und entsprechende Visualisierung am Bildschirm 10 simuliert.

Zur Ausführung der Rotationsbewegungen um die Rotationsbewegungsachsen 24, 25 und 26 sind im Ausführungsbeispiel ein vierter elektrischer Antrieb 27, ein fünfter elektrischer Antrieb 28 und ein sechster elektrischer Antrieb 29 vorgesehen. Der vierte elektrische Antrieb 27 und der fünfte elektrische Antrieb 28 sind an dem dem Handabschnitt 19 abgewandten Ende des Armabschnitts 18 angeordnet. Die Rotationsbewegung wird von den elektrischen Antrieben 27 und 28 mechanisch, insbesondere über Verbindungswellen, zu den Rotationsbewegungsachsen 24 und 25 übertragen. Der sechste elektrische Antrieb 29 ist in dem dem Handabschnitt 19 zugewandten Ende des Armabschnitts 18 angeordnet und treibt die sechste Rotationsbewegungsachse 26 an.

Zur Ansteuerung der elektrischen Antriebe 16, 21, 23 und 27 bis 29 des Roboterarms 3 ist eine Robotersteuereinrichtung 7 vorgesehen. Die Robotersteuereinrichtung 7 ist über separate, nicht gezeigte Verbindungsleitungen mit den einzelnen Antrieben 16, 21, 23 und 27 bis 29 verbunden. Um die Schwenkachsen 20 und 22 können die Schwinge 17 und der Armabschnitt 18 jeweils nur um einen vorgegebenen Winkelbereich verschwenkt werden. Dadurch ist eine elektrische Verbindung über ein entsprechend angeordnetes Kabel möglich. Die erste Rotationsbewegungsachse 13 ist jedoch als endlos drehende Achse ausgeführt. Die Versorgung der Robotersteuereinrichtung 7 und der elektrischen Antriebe 16, 21, 23 und 27 bis 29 muss deshalb über elektrische Verbindungen erfolgen, die eine endlose Relativdrehung des Sockels 6 gegenüber dem Gestell 5 zulassen. Im Ausführungsbeispiel ist hierzu ein Schleifring 15 zwischen Gestell 5 und Sockel 6 vorgesehen. Ein weiterer Schleifring 14 dient zur Übertragung der Daten zwischen dem Gestell 5 und dem Sockel 6. Wie in Fig. 1 schematisch gezeigt ist, ist die Simulationssteuereinrichtung 8 über eine Datenleitung 32 mit dem Gestell 5 verbunden. Eine Energieleitung 31, die an eine Energiequelle 34 angeschlossen ist, ist ebenfalls zum Gestell 5 geführt. An der Linearachse 4 sind die Leitungen 31 und 32 in einer Schleppkette 30 geführt. Die Energie wird vom Gestell 5 zum Sockel 6 über den Schleifring 15 übertragen, und die Daten werden über den Schleifring 14 übertragen. Die Schleifringe 14 und 15 können jeweils ein einziger Schleifring sein. Vorteilhaft erfolgt die Energieübertragung jedoch über zwei, insbesondere über drei Schleifringe, über die die einzelnen Phasen und der Nullleiter einer Energieleitung geführt sind.

Dadurch, dass die Robotersteuereinrichtung 7 am Sockel 6 angeordnet ist und nicht ortsfest im Raum wie die Simulationssteuereinrichtung 8, kann die gesamte Energie für die Robotersteuereinrichtung 7 und alle elektrischen Antriebe des Roboterarms 3 über einen oder mehrere gemeinsame Schleifringe 15 übertragen werden. Auch bei mehreren Schleifringen 15 wird die Energie für alle Antriebe jedoch gemeinsam übertragen und nicht nach Antrieben getrennt über separate Schleifringe. Auch Energie für die Aufnahme 2, die Ein-/Ausgabesteuereinrichtung 9 sowie den Joystick 11 und den Bildschirm 10 kann über den Schleifring 15 erfolgen.

Zur Übertragung der Daten von der Simulationssteuereinrichtung 8 zur Robotersteuereinrichtung 7 ist der Schleifring 14 vorgesehen. Es kann ein einzelner Schleifring 14 zur Datenübertragung vorgesehen sein. Vorteilhaft sind jedoch mindestens zwei Schleifringe 14 vorgesehen, die als Hin- und Rückleitung eines geschlossenen Stromkreises dienen. Die Datenübertragung erfolgt insbesondere über eine Busleitung. Über den Schleifring 14 werden vorteilhaft lediglich die Daten für die Robotersteuereinrichtung 7 übertragen. Im Ausführungsbeispiel ist vorgesehen, dass zwischen der Simulationssteuereinrichtung 8 und der Ein-/Ausgabesteuereinrichtung 9 eine kabellose Datenverbindung 33, beispielsweise eine Funkverbindung, eine Bluetoothverbindung oder dgl., besteht, über die die Daten zwischen Simulationssteuereinrichtung 8 und Ein-/Ausgabesteuereinrichtung 9 kabellos übertragen werden. Es kann jedoch auch vorgesehen sein, dass auch die Daten von der Simulationssteuereinrichtung 8 zur Ein-/Ausgabesteuereinrichtung 9 über den Schleifring 14 und entsprechende Kabel übertragen werden. Die Ein-/Ausgabesteuereinrichtung 9 ist über eine Energieleitung 35 mit Energie versorgt. Vorteilhaft ist die Ein-/Ausgabesteuereinrichtung separat abgesichert mit der Energiequelle 34 verbunden. Es kann jedoch auch vorgesehen sein, dass die Ein-/Ausgabesteuereinrichtung 9 über die Robotersteuereinrichtung 7 mit der Energiequelle 34 verbunden ist.

Fig. 2 zeigt eine Simulationsanordnung 41, deren Aufbau im Wesentlichen dem der Simulationsanordnung 1 entspricht. Gleiche Bezugszeichen kennzeichnen einander entsprechende Elemente. Die Simulationsanordnung 41 ist in Fig. 2 ausschnittsweise gezeigt. Nicht gezeigte Elemente entsprechen denen der Simulationsanordnung 1.

Die Simulationsanordnung 41 besitzt einen Roboterarm 43. Der Roboterarm 43 besitzt einen am Armabschnitt 18 angeordneten Handabschnitt 49, der eine vierte Rotationsbewegungsachse 44 besitzt, die als endlos drehende Achse ausgebildet ist. Der Handabschnitt 49 besitzt außerdem die fünfte Rotationsbewegungsachse 25 sowie eine sechste Rotationsbewegungsachse 46, die ebenfalls als endlos drehende Achse ausgebildet ist.

Im Ausführungsbeispiel nach Fig. 2 werden sowohl die Daten als auch die Energie zur Ein-/Ausgabesteuereinrichtung 9 kabelgebunden übertragen. Zur Übertragung der Energie ist die Energieleitung 35 vorgesehen. Zur Übertragung der Daten ist eine Datenverbindung 42 vorgesehen, die die Ein-/Ausgabesteuereinrichtung 9 mit der in Fig. 2 nicht gezeigten Robotersteuereinrichtung 7 verbindet. Über die endlos drehenden Achsen 44 und 46 werden die Daten und die Energie für die Ein-/Ausgabesteuereinrichtung 9 im Ausführungsbeispiel über Schleifringe übertragen. An der vierten Rotationsbewegungsachse 44 sind ein erster Schleifring 51 zur Übertragung von Daten zur Ein-/Ausgabesteuereinrichtung 9 und ein zweiter Schleifring 52 zur Übertragung von Energie zur Ein-/Ausgabesteuereinrichtung 9 vorgesehen. An der sechsten Rotationsbewegungsachse 46 sind ein erster Schleifring 55 zur Übertragung von Daten zur Ein-/Ausgabesteuereinrichtung 9 sowie ein zweiter Schleifring 56 zur Übertragung von Energie zur Ein-/Ausgabesteuereinrichtung 9 vorgesehen. Auch die Schleifringe 51, 52, 55 und 56 können jeweils mehrere Schleifringe für einzelne Phasen einer Energieleitung oder einer Datenleitung sein.

In der in Fig. 2 gezeigten Schwenkstellung des Handabschnitts 49 bezogen auf die fünfte Rotationsbewegungsachse 25 liegen die vierte Rotationsbewegungssachse 44 und die sechste Rotationsbewegungsachse 46 parallel, im Ausführungsbeispiel achsgleich zueinander. Führt der Handabschnitt 49 sowohl um die vierte Rotationsbewegungsachse 44 als auch um die sechste Rotationsbewegungsachse 46 Rotationsbewegungen in der gleichen Drehrichtung durch, so lässt sich eine Drehbewegung der Aufnahme 2 mit sehr hoher Drehgeschwindigkeit erreichen.

Die Ausbildung der vierten Rotationsbewegungsachse 44 und der sechsten Rotationsbewegungsachse 46 als endlos drehende Achsen kann auch für eine Simulationsanordnung vorgesehen sein, bei der die Robotersteuereinrichtung 7 nicht an dem Sockel 6 festgelegt ist und/oder bei dem die erste Rotationsbewegungsachse 13 nicht als endlos drehende Achse ausgebildet ist. Endlos drehende Achsen im Sinne der vorliegenden Anmeldung sind dabei Rotationsbewegungsachsen, die eine Vielzahl von Umdrehungen in der gleichen Drehrichtung zulassen und die keine Begrenzung für die Drehbewegung aufweisen, und zwar weder mechanisch durch die Konstruktion der Achse selbst noch durch Leitungen wie Energie- und Datenleitungen oder dgl.

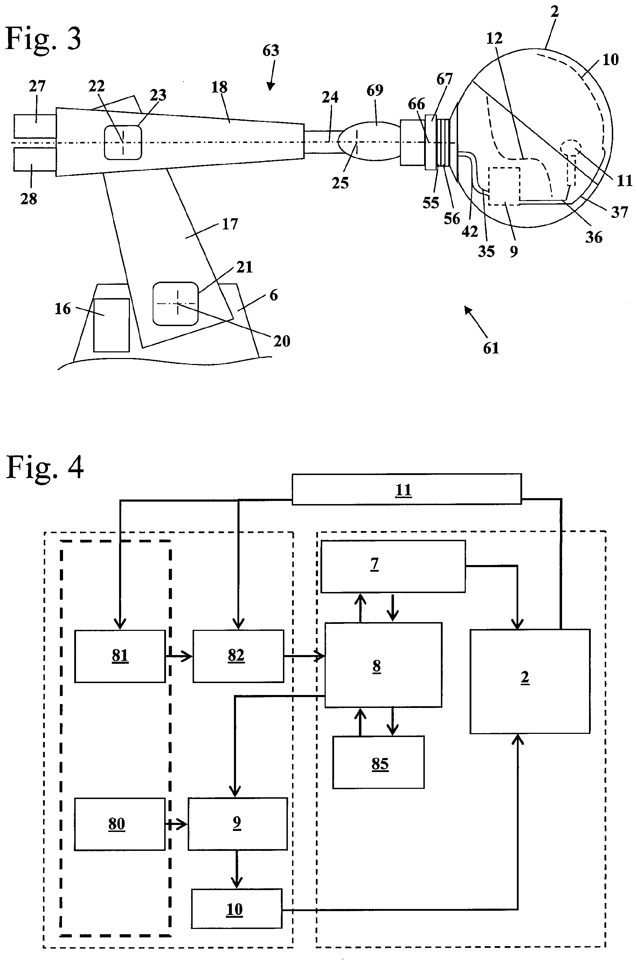

Fig. 3 zeigt ein Ausführungsbeispiel einer Simulationsanordnung 61, die einen Roboterarm 63 umfasst. Auch hier bezeichnen gleiche Bezugszeichen gleiche Elemente wie in den vorangegangenen Figuren, und der nicht gezeigte Bereich der Linearachse 4 der Simulationsanordnung 61 ist entsprechend zum Ausführungsbeispiel nach Fig. 1 ausgebildet.

Der Roboterarm 63 besitzt einen Handabschnitt 69. Der Handabschnitt 69 besitzt eine vierte Rotationsbewegungsachse 24 und eine fünfte Rotationsbewegungsachse 25, die jeweils nur um einen vorgegebenen Winkelbereich Schwenkbewegungen zulassen. Der Handabschnitt 69 besitzt eine sechste Rotationsbewegungsachse 66, die als endlos drehende Achse ausgebildet ist. An der sechsten Rotationsbewegungsachse 66 ist ein Getriebe 67 zwischen dem Antriebsteil und dem Abtriebsteil vorgesehen. Das Getriebe 67 ist im Ausführungsbeispiel als Planetengetriebe ausgebildet. Dadurch lässt sich eine sehr hohe Rotationsgeschwindigkeit um die sechste Rotationsbewegungsachse erreichen. Die Simulationsanordnungen 41 und 61 erlauben vorteilhaft Rotationsbewegungen um die sechste Rotationsbewegungsachse 46, 66 mit Winkelgeschwindigkeiten von mehr als 360° pro Sekunde.

Auch im Ausführungsbeispiel nach Fig. 3 ist die Ein-/Ausgabesteuereinrichtung 9 über eine kabelgebundene Datenverbindung 42 mit der Simulationssteueranordnung 8 verbunden. An der sechsten Rotationsbewegungsachse 66 sind ein erster Schleifring 55 zur Übertragung von Daten zur Ein-/Ausgabesteuereinrichtung 9 sowie ein zweiter Schleifring 56 zur Übertragung von Energie zur Ein-/Ausgabesteuereinrichtung 9 vorgesehen. Auch hier können jeweils mehrere Schleifringe zur Übertragung unterschiedlicher Phasen einer Energieleitung oder von Hin- und Rückleitungen einer Datenleitung vorgesehen sein.

Fig. 4 verdeutlicht schematisch die Funktionsweise der Simulationsanordnungen 1, 41 und 61. Grundlage für die Stimulation bildet ein Modell 80 der Umgebung, das die vom Vehikel aus sichtbare Umgebung dreidimensional darstellt. Das Vehikel kann dabei beispielsweise ein Fahrzeug oder ein Flugzeug sein. Als Eingangsparameter für die Simulation dient außerdem ein Bewegungsmodell 81, das Daten zur Bewegung des Vehikels liefert. Das Modell 80 der Umgebung wird in der Ein-/Ausgabesteuereinrichtung 9 entsprechend dem zu simulierenden Fahr- oder Flugmanöver verarbeitet, und das anzuzeigende Bild wird über den Bildschirm 10 in der Aufnahme 2 angezeigt. Anstatt des Bildschirms 10 können auch Projektoren oder dgl. vorgesehen sein. Die Aufbereitung des Modells 80 der Umgebung kann auch teilweise oder vollständig in der Simulationssteuereinrichtung 8 erfolgen.

Aus dem Bewegungsmodell 81 wird in der Bewegungssimulation 82 die von der Aufnahme 2 auszuführende Bewegung errechnet. Die Aufbereitung der Daten kann in einem separaten Rechner oder in der Simulationssteuereinrichtung 8 ausgeführt werden. Die Simulationssteuereinrichtung 8 ist mit einer Kollisionsvermeidung 85 gekoppelt, die für jede vom Roboterarm 3, 43, 63 auszuführende Bewegung ermittelt, ob die Bewegung kollisionsfrei durchgeführt werden kann. Die Simulationssteuereinrichtung 8 ist mit der Robotersteuereinrichtung 7 verbunden und liefert der Robotersteuereinrichtung 7 Daten, wie die Aufnahme 2 im Raum zu bewegen ist. Die Simulationssteuereinrichtung 8 steuert außerdem die Linearachse 4 entsprechend an. In der Aufnahme 2 spürt ein Bediener die Bewegungen, die von der Robotersteuereinrichtung 7 erzeugt werden und die den gleichen Sinneseindruck hervorrufen wie die zu simulierende Bewegung. Gleichzeitig sieht der Bediener das vom Bildschirm 10 erzeugte Bild. Dadurch wird eine realistische Simulation erreicht. Über den Joystick 11 wirkt der Benutzer auf die Simulation ein. Über den Joystick 11 kann der Nutzer das simulierte Vehikel steuern. Entsprechend der am Joystick 11 eingegebenen Steuerbefehle wird eine Bewegung der Aufnahme 2 und ein in der Aufnahme 2 anzuzeigendes Bild errechnet.

Es hat sich gezeigt, dass jede Person Bewegungen der Aufnahme 2 unterschiedlich wahrnimmt. Um eine Simulation möglichst realistisch ausführen zu können, ist vorgesehen, vor der Simulation eine Kalibrierung der Simulationsanordnung 1, 41, 61 auszuführen, bei der die Wahrnehmungsschwellen des Bedieners für Rotationsbewegungen und Translationsbewegungen ermittelt und bei der Bewegungssimulation berücksichtigt werden. Die Wahrnehmungsschwellen können beispielsweise bei der Festlegung von Mindestbewegungen, die vom Nutzer noch gespürt werden, oder von Maximalbewegungen, die vom Nutzer nicht gespürt werden, genutzt werden. Zur Ermittlung der Wahrnehmungsschwelle für eine Rotationsbewegung ist vorgesehen, mit der Aufnahme 2 und darin angeordnetem Nutzer eine Rotationsbewegung durchzuführen. Die Geschwindigkeit der Rotation wird dabei erhöht, bis ein Bediener die Rotation spürt. Wann der Bediener die Rotation spürt, kann beispielsweise über eine Eingabeeinrichtung vom Bediener eingegeben werden. Die Rotation, die ein Bediener gerade noch als Rotation erkennen kann, wird in der Bewegungssimulation 82 zur Festlegung der am Roboterarm 3 auszuführenden Bewegungen genutzt.

Da für die Simulationsanordnung 1, 41, 61 nur begrenzter Raum zur Ausführung von Bewegungen zur Verfügung steht, wird die Simulationsanordnung 1, 41, 61 während der gesamten Simulation mit sehr geringer Geschwindigkeit in ihre Ausgangsposition zurückgefahren. Die sehr geringe Geschwindigkeit, die sogenannte Washout-Geschwindigkeit, wird so gering gewählt, dass ein Bediener sie nicht wahrnehmen kann. Für eine Kalibrierung einer Simulationsanordnung 1, 41, 61 ist vorgesehen, die Washout-Geschwindigkeit, die von einem Nutzer wahrgenommen wird, zu ermitteln. Auch diese Geschwindigkeit fließt bei der Bewegungssimulation 82 ein. Hierzu wird die Wahrnehmungsschwelle eines Nutzers für eine Translationsbewegung ermittelt. Durch die Kalibrierung der Simulationseinrichtung wird die Bewegungssimulation 82 nicht mit starren Werten für die Washout-Geschwindigkeit und für die Rotationsgeschwindigkeiten durchgeführt, sondern die bei der Kalibrierung ermittelten, vom Nutzer gerade noch gespürten Geschwindigkeiten für Rotations- und Translationsbewegung werden mit einbezogen. Dadurch wird eine besonders realistische Simulation erreicht.

## Patentansprüche

1. Simulationsanordnung mit einem Roboterarm (3, 43, 63), an dem eine Aufnahme (2) für einen Nutzer gehalten ist, wobei die Aufnahme (2) mindestens eine Ein-/Ausgabeeinrichtung aufweist, die über eine Datenverbindung und über eine Energieübertragungsverbindung mit einer Simulationssteuereinrichtung (8) verbunden ist, wobei die Simulationsanordnung (1, 41, 61) ein Gestell (5) besitzt, an dem ein Sockel (6) um eine erste Rotationsbewegungsachse (13) endlos drehbar gelagert ist, wobei der Roboterarm (3, 43, 63) über den Sockel (6) an dem Gestell (5) festgelegt ist, wobei der Roboterarm (3, 43, 63) mindestens einen elektrischen Antrieb (16, 21, 23, 27, 28, 29) zur Ausführung einer Schwenkbewegung um mindestens eine Rotationsbewegungsachse (13, 20, 22, 24, 25, 26, 44, 46, 66) besitzt, und wobei die Simulationsanordnung (1, 41, 61) eine Robotersteuereinrichtung (7) zur Ansteuerung des mindestens einen elektrischen Antriebs (16, 21, 23, 27, 28, 29) aufweist,
**dadurch gekennzeichnet, dass** die Robotersteuereinrichtung (7) an dem Sockel (6) festgelegt ist, wodurch die Robotersteuereinrichtung (7) im Betrieb gegenüber dem Gestell (5) mitdreht.

2. Simulationsanordnung nach Anspruch 1,
**dadurch gekennzeichnet, dass** mindestens ein Schleifring (15) zur Übertragung von Energie von dem Gestell (5) zu dem Sockel (6) vorgesehen ist, wobei über den Schleifring (15) sowohl die Energie für die Robotersteuereinrichtung (7) und den mindestens einen elektrischen Antrieb (16, 21, 23, 27, 28, 29) als auch die Energie für die mindestens eine Ein-/Ausgabeeinrichtung der Aufnahme (2) übertragen wird.

3. Simulationsanordnung nach Anspruch 2,
**dadurch gekennzeichnet, dass** mehrere elektrische Antriebe (16, 21, 23, 27, 28, 29) und mehrere Ein-/Ausgabeeinrichtungen vorgesehen sind und die Energie für alle von der Robotersteuereinrichtung (7) angesteuerten elektrischen Antriebe (16, 21, 23, 27, 28, 29) und die Energie für alle Ein-/Ausgabeeinrichtungen über den gemeinsamen Schleifring (15) zur Übertragung von Energie übertragen wird.

4. Simulationsanordnung nach einem der Ansprüche 1 bis 3,
**dadurch gekennzeichnet, dass** ein Schleifring (14) zur Übertragung von Daten von dem Gestell (5) zu dem Sockel (6) vorgesehen ist.

5. Simulationsanordnung nach Anspruch 4,
**dadurch gekennzeichnet, dass** über den Schleifring (14) zur Übertragung von Daten sowohl Daten für die Robotersteuereinrichtung (7) als auch Daten für mindestens eine Ein-/Ausgabeeinrichtung übertragen werden.

6. Simulationsanordnung nach einem der Ansprüche 1 bis 5,
**dadurch gekennzeichnet, dass** die Datenverbindung der Ein-/Ausgabeeinrichtung mit der Simulationssteuereinrichtung (8) eine kabellose Datenverbindung (33) umfasst, über die Daten für mindestens eine Ein-/Ausgabeeinrichtung übertragen werden.

7. Simulationsanordnung nach einem der Ansprüche 1 bis 6,
**dadurch gekennzeichnet, dass** die Aufnahme (2) eine Ein-/Ausgabesteuereinrichtung (9) zur Steuerung der mindestens einen Ein-/Ausgabeeinrichtung besitzt, über die die Ein-/Ausgabeeinrichtung mit der Simulationssteuereinrichtung (8) verbunden ist.

8. Simulationsanordnung nach einem der Ansprüche 1 bis 7,
**dadurch gekennzeichnet, dass** die Simulationsanordnung (1, 41, 61) eine Linearachse (4) besitzt, an der das Gestell (5) gehalten und gemeinsam mit dem Roboterarm (3, 43, 63) in Richtung einer Translationsbewegungsachse (39) verfahrbar ist.

9. Simulationsanordnung nach einem der Ansprüche 1 bis 8,
**dadurch gekennzeichnet, dass** der Roboterarm (3, 43, 63) mindestens fünf Rotationsbewegungsachsen (20, 22, 24, 25, 26, 44, 46, 66) besitzt.

10. Simulationsanordnung nach Anspruch 9,
**dadurch gekennzeichnet, dass** der Roboterarm (3, 43, 63) eine Schwinge (17) besitzt, die gegenüber dem Sockel (6) um eine zweite Rotationsbewegungsachse (20) schwenkbar ist, dass der Roboterarm (3, 43, 63) einen Armabschnitt (18) besitzt, der gegenüber der Schwinge (17) um eine dritte Rotationsbewegungsachse (22) schwenkbar ist, und dass der Roboterarm (3, 43, 63) einen Handabschnitt (19, 49, 69) besitzt, der Schwenkbewegungen um eine vierte Rotationsbewegungsachse (24, 44), eine fünfte Rotationsbewegungsachse (25) und eine sechste Rotationsbewegungsachse (26, 46, 66) ermöglicht.

11. Simulationsanordnung nach Anspruch 10,
**dadurch gekennzeichnet, dass** die vierte Rotationsbewegungsachse (24, 44) und die sechste Rotationsbewegungsachse (26, 46, 66) in einer Schwenklage um die fünfte Rotationsbewegungsachse (25) parallel zueinander ausgerichtet sind.

12. Simulationsanordnung nach Anspruch 10 oder 11,
**dadurch gekennzeichnet, dass** die vierte Rotationsbewegungsachse (44) eine endlos drehende Achse ist, und dass an der vierten Rotationsbewegungsachse (44) insbesondere mindestens ein Schleifring (52) zur Übertragung von Energie für die mindestens eine Ein-/Ausgabeeinrichtung vorgesehen ist.

13. Simulationsanordnung nach einem der Ansprüche 10 bis 12,
**dadurch gekennzeichnet, dass** die sechste Rotationsbewegungsachse (46, 66) eine endlos drehende Achse ist, und dass an der sechsten Rotationsbewegungsachse (46, 66) insbesondere mindestens ein Schleifring (56) zur Übertragung von Energie für die mindestens eine Ein-/Ausgabeeinrichtung vorgesehen ist.

14. Simulationsanordnung nach Anspruch 13,
**dadurch gekennzeichnet, dass** an der sechsten Rotationsbewegungsachse (66) ein Getriebe (67) angeordnet ist.

## Claims

1. Simulation assembly with a robot arm (3, 43, 63), on which a receptacle (2) for a user is held. wherein the receptacle (2) comprises at least one input/output device connected to a simulation control device (8) via a data connection and an energy transmission connection, wherein the simulation assembly (1, 41, 61) has a stand (5), on which a pedestal (6) is mounted for continuous rotation about a first rotary motion axis (13), wherein the robot arm (3, 43, 63) is located on the stand (5) via the pedestal (6), wherein the robot arm (3, 43, 63) has at least one electric drive (16, 21, 23, 27, 28, 29) for the execution of a pivoting movement about at least one rotary motion axis (13, 20, 22, 24, 25, 26, 44, 46, 66), and wherein the simulation assembly (1, 41, 61) comprises a robot control device (7) for controlling the at least one electric drive (16, 21, 23, 27, 28, 29),
**characterised in that** the robot control device (7) is located on the pedestal (6), as a result of which the robot control device (7) co-rotates relative to the stand (5) in operation.

2. Simulation assembly according to claim 1,
**characterised in that** at least one slip ring (15) is provided for transmitting energy from the stand (5) to the pedestal (6), wherein both the energy for the robot control device (7) and the at least one electric drive (16, 21, 23, 27, 28, 29) and the energy for the at least one input/output device of the receptacle (2) are transmitted via the slip ring (15).

3. Simulation assembly according to claim 2,
**characterised in that** several electric drives (16, 21, 23, 27, 28, 29) and several input/output devices are provided and the energy for all electric drives (16, 21, 23, 27, 28, 29) controlled by the robot control device (7) and the energy for all input/output devices is transmitted via the common slip ring (15) for the transmission of energy.

4. Simulation assembly according to any of claims 1 to 3,
**characterised in that** a slip ring (14) is provided for transmitting data from the stand (5) to the pedestal (6).

5. Simulation assembly according to claim 4,
**characterised in that** both data for the robot control device (7) and data for at least one input/output device are transmitted via the slip ring (14) for transmitting data.

6. Simulation assembly according to any of claims 1 to 5,
**characterised in that** the data connection between the input/output device and the simulation control device (8) comprises a wireless data connection (33), via which the data for the at least one input/output device are transmitted.

7. Simulation assembly according to any of claims 1 to 6,
**characterised in that** the receptacle (2) has an input/output control device (9) for controlling the at least one input/output device, via which the input/output device is connected to the simulation control device (8).

8. Simulation assembly according to any of claims 1 to 7,
**characterised in that** the simulation assembly (1, 41, 61) has a linear axis (4), on which the stand (5) is held and movable together with the robot arm (3, 43, 63) in the direction of a translational motion axis (39).

9. Simulation assembly according to any of claims 1 to 8,
**characterised in that** the robot arm (3, 43, 63) has at least five rotary motion axes (20, 22, 24, 25, 26, 44, 46, 66).

10. Simulation assembly according to claim 9,
**characterised in that** the robot arm (3, 43, 63) has a rocker arm (17), which is pivotable relative to the pedestal (6) about a second rotary motion axis (20), **in that** the robot arm (3, 43, 63) has an arm section (18), which is pivotable relative to the rocker arm (17) about a third rotary motion axis (22), and **in that** the robot arm (3, 43, 63) has a hand section (19, 49, 69), which facilitates pivoting movements about a fourth rotary motion axis (24, 44), a fifth rotary motion axis (25) and a sixth rotary motion axis (26, 46, 66).

11. Simulation assembly according to claim 10,
**characterised in that** the fourth rotary motion axis (24, 44) and the sixth rotary motion axis (26, 46, 66) are oriented parallel to each other in a pivoting position about the fifth rotary motion axis (25).

12. Simulation assembly according to claim 10 or 11,
**characterised in that** the fourth rotary motion axis (44) is a continuously rotating axis, and **in that** in particular at least one slip ring (52) for transmitting energy for the at least one input/output device is provided at the fourth rotary motion axis (44).

13. Simulation assembly according to any of claims 10 to 12,
**characterised in that** the sixth rotary motion axis (46, 66) is a continuously rotating axis, and **in that** in particular at least one slip ring (56) for transmitting energy for the at least one input/output device is provided at the sixth rotary motion axis (46, 66).

14. Simulation assembly according to claim 13,
**characterised in that** a gearbox (67) is located at the sixth rotary motion axis (66).

## Revendications

1. Dispositif de simulation pour un bras de robot (3, 43, 63) sur lequel est retenu un logement (2) pour un utilisateur, le logement (2) comportant au moins un dispositif d'entrée/sortie qui est relié par une liaison de données et une liaison de transmission d'énergie à un dispositif de commande de simulation (8), le dispositif de simulation (1, 41, 61) comportant un bâti (5) sur lequel un socle (6) est monté pivotant sans fin sur un premier axe de rotation (13), le bras de robot (3, 43, 63) étant fixé au bâti (5) par l'intermédiaire du socle (6), le bras de robot (3, 43, 63) comportant au moins un entraînement électrique (16, 21, 23, 27, 28, 29) pour décrire un mouvement pivotant sur au moins un axe de rotation (13, 20, 22, 24, 25, 26, 44, 46, 66), et le dispositif de simulation (1, 41, 61) comportant un dispositif de commande de robot (7) pour commander le ou les entraînements électriques (16, 21, 23, 27, 28, 29),
**caractérisé en ce que** le dispositif de commande de robot (7) est fixé au socle (6), moyennant quoi il tourne avec le bâti (5), en fonctionnement.

2. Dispositif de simulation selon la revendication 1,
**caractérisé en ce qu'**il est prévu au moins une bague collectrice (15) pour transmettre l'énergie du bâti (5) vers le socle (6), la bague collectrice (15) transmettant aussi bien l'énergie pour le dispositif de commande de robot (7) et le ou les entraînements électriques (16, 21, 23, 27, 28, 29) que l'énergie pour le ou les dispositifs d'entrée/sortie du logement (2).

3. Dispositif de simulation selon la revendication 2,
**caractérisé en ce qu'**il est prévu plusieurs entraînements électriques (16, 21, 23, 27, 28, 29) et plusieurs dispositifs d'entrée/sortie, et l'énergie pour tous les entraînements électriques (16, 21, 23, 27, 28, 29) et l'énergie pour tous les dispositifs d'entrée/sortie sont transmises par la bague collectrice commune (15) prévue pour la transmission d'énergie.

4. Dispositif de simulation selon l'une des revendications 1 à 3,
**caractérisé en ce qu'**il est prévu une bague collectrice (14) pour la transmission de données du bâti (5) vers le socle (6).

5. Dispositif de simulation selon la revendication 4,
**caractérisé en ce que** la bague collectrice (14) pour la transmission de données transmet aussi bien les données pour le dispositif de commande de robot (7) que les données pour au moins un dispositif d'entrée/sortie.

6. Dispositif de simulation selon l'une des revendications 1 à 5,
**caractérisé en ce que** la liaison de données entre le dispositif d'entrée/sortie et le dispositif de commande de simulation (8) comprend une liaison de données sans fil (33) par l'intermédiaire de laquelle sont transmises les données pour au moins un dispositif d'entrée/sortie.

7. Dispositif de simulation selon l'une des revendications 1 à 6,
**caractérisé en ce que** le logement (2) comporte un dispositif de commande d'entrée/sortie (9), pour la commande du ou des dispositifs d'entrée/sortie, par l'intermédiaire duquel le dispositif d'entrée/sortie est relié au dispositif de commande de simulation (8).

8. Dispositif de simulation selon l'une des revendications 1 à 7,
**caractérisé en ce que** le dispositif de simulation (1, 41, 61) comporte un axe linéaire (4) sur lequel le bâti (5) est retenu et est apte à être déplacé conjointement avec le bras de robot (3, 43, 63) dans le sens d'un axe de translation (39).

9. Dispositif de simulation selon l'une des revendications 1 à 8,
**caractérisé en ce que** le bras de robot (3, 43, 63) comporte au moins cinq axes de rotation (20, 22, 24, 25, 26, 44, 46, 66).

10. Dispositif de simulation selon la revendication 9,
**caractérisé en ce que** le bras de robot (3, 43, 63) comporte un balancier (17) qui est apte à pivoter par rapport au socle (6) sur un deuxième axe de rotation (20), **en ce que** le bras de robot (3, 43, 63) comporte une section formant bras (18) qui est apte à pivoter par rapport au balancier (17) sur un troisième axe de rotation (22), et **en ce que** le bras de robot (3, 43, 63) comporte une section formant main (19, 40, 69) qui permet des pivotements sur un quatrième axe de rotation (24, 44), un cinquième axe de rotation (25) et un sixième axe de rotation (26, 46, 66).

11. Dispositif de simulation selon la revendication 10,
**caractérisé en ce que** le quatrième axe de rotation (24, 44) et le sixième axe de rotation (26, 46, 66), dans une position de pivotement sur le cinquième axe de rotation (25), sont parallèles.

12. Dispositif de simulation selon la revendication 10 ou 11,
**caractérisé en ce que** le quatrième axe de rotation (44) est un axe tournant sans fin, et **en ce qu'**il est prévu sur le quatrième axe de rotation (44) en particulier au moins une bague collectrice (52) pour la transmission d'énergie pour le ou les dispositifs d'entrée/sortie.

13. Dispositif de simulation selon l'une des revendications 10 à 12,
**caractérisé en ce que** le sixième axe de rotation (46, 66) est un axe tournant sans fin, et **en ce qu'**il est prévu sur le sixième axe de rotation (46, 66) en particulier au moins une bague collectrice (56) pour la transmission d'énergie pour le ou les dispositifs d'entrée/sortie.

14. Dispositif de simulation selon la revendication 13,
**caractérisé en ce qu'**il est prévu sur le sixième axe de rotation (66) une transmission (67).
